# EUROPÄISCHE PATENTSCHRIFT

(11) **EP 0 588 160 B1**
(45) Veröffentlichungstag und Bekanntmachung des Hinweises auf die Patenterteilung: **12.06.1996**
(21) Anmeldenummer: 93114038.8
(22) Anmeldetag: 02.09.1993
(51) Int. Cl.: C05F 17/02, B01F 7/00

(54) **Verfahren und Vorrichtung zur Behandlung von Abfallstoffen, insbesondere von organischen Gastronomieabfällen**
Process and device for the treatment of waste, in particular food wastes
Procédé et dispositif de traitement des déchets en particulier des déchets alimentaires

(30) Priorität: 18.09.1992 DE 4231293
(43) Veröffentlichungstag der Anmeldung: 23.03.1994
(73) Patentinhaber: SQ Services AG, CH-3612 Steinhausen (CH)
(72) Erfinder: Wirth, Heinz, D-88085 Langenargen (DE)
(74) Vertreter: Patentanwälte Eisele, Otten & Roth

(56) Entgegenhaltungen:
- EP-A- 0 536 767
- DE-A- 2 804 343
- FR-A- 1 088 000

## Beschreibung

Die Erfindung betrifft ein Verfahren und eine Vorrichtung zur Behandlung von Abfallstoffen.

Die Behandlung von Abfallstoffen gewinnt in der heutigen Zeit immer mehr an wirtschaftlicher Bedeutung. Zum einen kommt es darauf an, das Abfallvolumen für eine wirtschaftliche Entsorgung möglichst klein zu halten, d. h. sperrige Abfälle müssen in eine kompakte Form gebracht werden. Zum anderen gewinnt insbesondere bei organischen Abfallstoffen die Kompostierung an Bedeutung.

Insbesondere zur Kompostierung von Abfallstoffen aus privaten Haushalten, Gaststätten und dgl. ist mit der DE 38 44 700 C2 (≙ EP-A1-0 441 994) ein Verfahren und eine Vorrichtung bekannt geworden, die am Ort der Abfallentstehung eingesetzt werden können. Es handelt sich hierbei um ein Verfahren, bei dem der Abfall fein zerkleinert und unter Zufuhr von Frischluft vermischt wird. Hierbei findet ein aerober Umwandlungsprozeß statt, als dessen Ergebnis ein kompostierfähiges Gut verbleibt. In dieser Schrift wird weiterhin vorgeschlagen, die Frischluftzufuhr und deren Temperatur während des Verfahrens zu steuern.

Die vorgeschlagene Vorrichtung zur Durchführung des oben angeführten Verfahrens umfaßt ein Gehäuse, eine Misch- und Zerkleinerungseinrichtung sowie eine Fördereinrichtung zur Entleerung des Gehäuses.

Diese Vorrichtung sowie das zugehörige Verfahren haben den Nachteil, daß keinesfalls mit jeder beliebigen Konsistenz des zu bearbeitenden Abfalls das gewünschte Ergebnis erzielt wird. Insbesondere bei einem hohen Feuchtigkeitsgehalt führt das reine Mischen des zerkleinerten Abfalls nicht zu einer ausreichenden Durchlüftung, wodurch eine aerobe Umwandlung verhindert wird und ein unerwünschter Gärprozeß in Gang kommt. Außerdem entstehen hierbei Verklebungen und Stauungen innerhalb des Materialflusses, wobei in diesen Bereichen keine Durchlüftung mehr gewährleistet ist, was zu wiederum unerwünschten Gärprozessen führt. Das aufgestaute Material führt darüber hinaus zu Behinderungen im gesamten Arbeitsablauf einer derartigen Kompostieranlage.

Aus der DE-A-28 04 343 ist eine Anlage zur Aufbereitung und Verteilung von Mischfutter bekannt geworden, die ggf. auch zur Bearbeitung von Abfallstoffen verwendbar wäre. Die bekannte Anlage weist eine Zerkleinerungsvorrichtung für einen ersten Stoffanteil auf, der nach Zerkleinerung einer Mischvorrichtung zugeführt wird, die ihrerseits eine Zufuhröffnung für einen zweiten Stoffanteil aufweist, wobei die Stoffanteile über horizontale und vertikale Förderschnecken vermischt werden. Die bekannte Anlage hat den Nachteil, daß diese nicht ohne weiteres in dieser Konzeption geeignet ist, einen einzigen Abfallstoff zu behandeln.

Aus der nicht vorveröffentlichten EP-O 536 767 A1 ist darüber hinaus eine Vorrichtung zur Behandlung insbesondere von landwirtschaftlichen und industriellen Fällen bekannt geworden, bei welcher das eingebrachte Gut über eine Anzahl von horizontalen und vertikalen Förderschnecken vermischt wird. Eine konstante Umwälzung des behandelten Materials in Form einer Berieselung mit Luftzufuhr findet aufgrund einer unzureichenden Verteilung des Füllgutes nicht statt.

Ziel der Erfindung ist daher die Schaffung eines Verfahrens und einer Vorrichtung der eingangs erwähnten Art, die dazu geeignet sind, Abfallgemische beliebiger Konsistenz und vor allem auch mit hohem Feuchtigkeitsgehalt in eine kompakte und gut durchmischte Form zu bringen, wobei zur Umwandlung von organischen Abfallstoffen innerhalb eines aeroben Umwandlungsprozesses eine gute Durchlüftung gewährleistet bleibt.

Diese Aufgabe wird durch die Merkmale der Ansprüche 1 und 4 gelöst. Demgemäß wird der zerkleinerte Abfall ständig einer Berieselungsvorrichtung zugeführt, wobei ein Teil des umgewälzten Abfallgemisches in die Zerkleinerungsanlage zurückgeführt wird. Während des Rieselvorgangs, d. h. des freien Falls kleiner Partikel, werden diese einzelne Partikel vollständig von Luft umspült. Ein Verkleben des zerkleinerten Gutes wird hiermit erfolgreich vermieden. Durch die gute Lüftung des Abfallgemisches wird die aerobe Zersetzung organischer Abfallstoffe optimal gefördert. Ein Abfallgemisch mit zu hohem Feuchtigkeitsgehalt kann außerdem auf diese Weise gut getrocknet werden.

Zur Durchführung der genannten Behandlung von Abfallstoffen wird eine Berieselungseinrichtung vorgeschlagen, die über eine Steigvorrichtung und eine Zuführungsvorrichtung für die Steigvorrichtung verfügt. Am oberen Ende der Steigvorrichtung wird ein Teil des zu bearbeitende Abfallgemisch in seitlicher Richtung verstreut, um wieder in den im Behälter befindlichen Sumpf zurückzufallen, wobei es während des Falls vollständig von Luft umspült wird. Ein anderer Teil des Abfallgemisches wird erneut der Zerkleinerungsvorrichtung zugeführt. Die Zuführungsvorrichtung sammelt das in einem großen Umkreis herabgefallene Füllgut auf, um es dem unteren Ende der Steigvorrichtung wiederum zuzuführen.

Durch die in den Unteransprüchen aufgeführten Maßnahmen sind vorteilhafte Ausführungen und Verbesserungen der Erfindung möglich.

Vorteilhafterweise wird demgemäß die Temperatur, die Feuchtigkeit und die Frischluftzufuhr abhängig von der Konsistenz des jeweiligen Materials und dessen Behandlungsstufe durch entsprechende Einrichtungen geregelt. Auf diese Weise kann ein optimales Milieu für den genannten aeroben Zersetzungsprozeß eingestellt werden.

Von besonderem Vorteil ist es, wenn sich die Zuführungsvorrichtung über den größten Teil des Gehäusebodens erstreckt, der dergestalt an die Form der Zuführungsvorrichtung angepaßt ist, daß der Sumpf nahezu vollständig von dieser erfaßbar ist. Hierdurch werden unerwünschte Ablagerungen und Verklebungen des Abfallgemisches im Sumpf vermieden, da nahezu das gesamte Abfallgemisch immer wieder der Steigvorrichtung zugeführt wird und somit den Verrieselungsprozeß durchläuft.

Von besonderer praktischer Bedeutung ist es, die Steigvorrichtung der Berieselungseinrichtung gleichzeitig als Fördervorrichtung zur Entleerung des Gehäuses zu verwenden. Durch ein geeignetes Umlenkmittel, beispielsweise einer Klappe, kann der Materialstrom am oberen Ende der Steigvorrichtung wahlweise in einen Entleerungskanal umgeleitet werden, oder wie oben angeführt, seitlich verstreut werden, um anschließend auf den Sumpf niederzurieseln.

Es empfiehlt sich, den Trichter der Zerkleinerungsvorrichtung unterhalb des oberen Endes der Steigvorrichtung anzubringen, wodurch während des Berieselungsvorgangs ein Teil des Abfallgemischs erfindungsgemäß wieder in die Zerkleinerungsvorrichtung hinein fällt und somit dem Zerkleinerungsvorgang erneut zugeführt wird. Hierdurch wird eine ständige Verfeinerung des Abfallgemischs erreicht.

In einer technisch besonders eleganten Lösung werden die Zuführungs- und die Steigvorrichtung gleichzeitig als Mischwerke ausgebildet. Dies kann beispielsweise dadurch geschehen, daß die Zuführungs- und die Steigvorrichtung jeweils als zwei gegenläufige Doppelschnecken ausgebildet sind. Durch diese Ausgestaltung wird das Abfallgemisch während des Transportes ständig durchmischt, so daß im Zuge der gleichzeitigen Verfeinerung des Gemischs durch die Zerkleinerungsvorrichtung mit der Zeit ein homogenes feines Gemisch entsteht.

Zur besseren Verteilung des Abfallgemisches während der Berieselung innerhalb des Gehäuses ist das Anbringen von Rieselblechen zur Ablenkung des Güterstroms in die jeweils gewünschte Richtung vorzusehen. Das Gehäuse kann außerdem zur Ausnutzung der entstehenden Prozeßwärme während des Zersetzungsvorgangs thermisch isoliert werden.

Ein Ausführungsbeispiel der Erfindung ist in der Zeichnung dargestellt und in der anschließenden Beschreibung näher erläutert.

Es zeigen
- Fig. 1: einen Längsschnitt durch eine erfindungsgemäße Kompostieranlage und
- Fig. 2: einen Querschnitt auf Höhe der Linie II in Fig. 1.

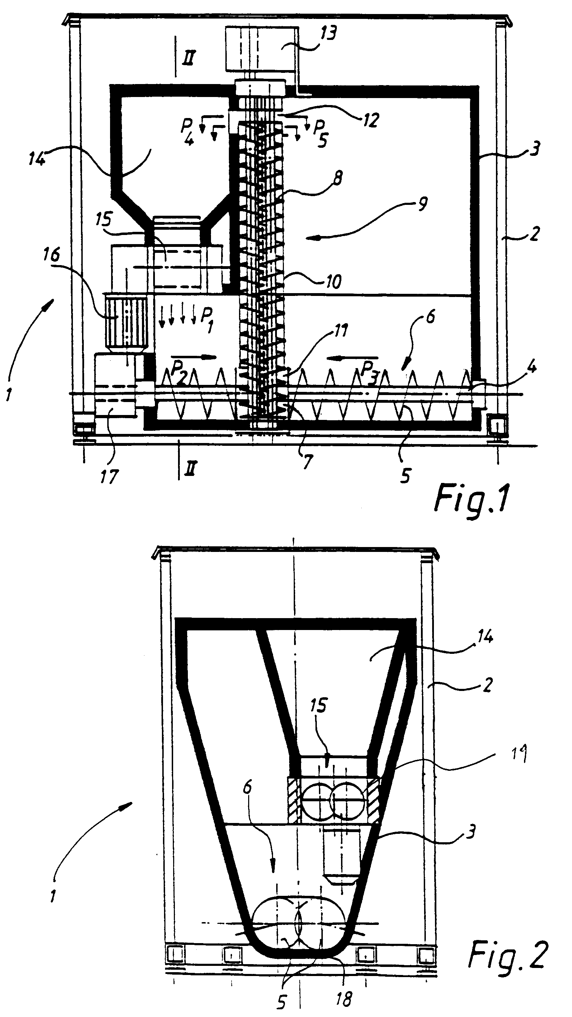

Die Kompostieranlage 1 in Fig. 1 ist auf einem Rahmengestell 2 gelagert. Sie umfaßt ein Gehäuse 3, das in seinem unteren Bereich von Achsen 4 zweier horizontaler Förderschnecken 5 durchsetzt ist, die die Zuführungsvorrichtung 6 bilden. Die Wendeln der Förderschnecken 5 sind im mittleren Bereich 7 der Förderschnecken 5 unterbrochen, um Raum für eine zwei horizontal stehende Steigschnecken 8 umfassende Steigvorrichtung 9 zu lassen. Die beiden Steigschnecken 7 sind von einer Wandung 10 ummantelt, die am unteren Ende 11 und am oberen Ende 12 der Steigschnecken unterbrochen ist. Oberhalb der Steigschnecken 9 ist der Antrieb 13 für die Steigschnecken 9 dargestellt. Auf der linken Seite der Steigschnecken 9 befindet sich ein Fülltrichter 14, der in ein Schneidwerk 15 mündet. Auf der linken Seite des Gehäuses 3 ist der Schneidwerksantrieb 16 und der Antrieb 17 für die Förderschnecken dargestellt.

In der Darstellung von Fig. 2 ist die Anordnung der Zuführungsvorrichtung 6 in Form zweier Schnecken 5 besser sichtbar. Auch die wannenförmige Ausbildung des Gehäusebodens 18 ist im Querschnitt nach Fig. 2 deutlich gemacht. Das aus auf zwei Achsen rotierenden Mitnehmern und Schneidmessern bestehende Schneidwerk 15 ist durch zwei Kreise 19 angedeutet.

Zur Füllung der Anlage wird das Abfallgut über eine nicht dargestellte Rampe in den Fülltrichter 14 eingefüllt. Über das Schneidwerk 15 fällt das Füllgut in Richtung der Pfeile P₁ auf den wannenförmigen Gehäuseboden 18, um dort den sogenannten Sumpf zu bilden. Über die doppelte Förderschnecke 5 wird das Füllgut von links in Pfeilrichtung P₂ und von rechts in Richtung P₃ den Steigschnecken 8 zugeführt. Diese fördern den zerkleinerten Abfall zum oberen Ende 12, wo das Füllgut aufgrund der Fördergeschwindigkeit in Zusammenwirken mit der Öffnungsgröße der Wandung 10 seitlich versprengt wird. Ein Teil des Füllguts fällt entlang der Pfeile P₄ zurück in den Fülltrichter 14, wonach es durch das Schneidwerk 15 weiter zerkleinert wird. Der andere Teil fällt entlang den Pfeilen P₅ direkt zurück auf den Sumpf, der auf dem Gehäuseboden 18 aufliegt.

Somit ist eine Berieselungsvorrichtung gegeben, die das Füllgut ständig auflockert und zusätzlich mit der Zeit immer feiner zerkleinert. Für eine optimale Durchlüftung ist durch den ständigen Berieselungsvorgang gesorgt. Durch die Ausbildung sowohl der Zuführungsvorrichtung 6 als auch der Steigvorrichtung 9 in Form zweier gegenläufiger Schnecken 5 bzw. 8 wird außerdem während es Umwälzvorgangs das Füllgut ständig gemischt.

Zur Entleerung wird in diesem Ausführungsbeispiel der Fülltrichter 14 durch eine nicht dargestellte Klappe nach unten verschlossen, die gleichzeitig eine Öffnung in der Seitenwand des Fülltrichters 14 zu einem ebenfalls nicht dargestellten Abfüllschacht freigibt. Hierdurch wird der in den Fülltrichter 14 fallende Anteil des Füllgutes der Kompostieranlage entnommen und diese somit mit der Zeit entleert.

Für eine weitere Milieuverbesserung für den aeroben Zersetzungsprozeß können nicht dargestellte Zusatzvorrichtungen, wie Sprühdüsen für Wasser, Lüftungsvorrichtungen, Meßvorrichtungen für Luftfeuchtigkeit, Temperatur oder dgl., sowie Heiz- bzw. Kühlvorrichtungen usw., bekannter Art zusätzlich eingebaut werden.

## Patentansprüche

1. Verfahren zur Behandlung von Abfallstoffen, insbesondere von organischen Gastronomieabfällen, mit einer Zerkleinerung und einem Mischvorgang, wobei das zerkleinerte und gemischte Füllgut in einem ersten Teilstrom (P5) ständig einer Berieselungsvorrichtung (6, 9) zugeführt und hierbei vollständig von Luft umspült wird und wobei ein zweiter Teilstrom (P4) des Füllgutes ständig in eine Zerkleinerungsvorrichtung (15) zurückgeführt wird.

2. Verfahren nach Anspruch 1, dadurch gekennzeichnet, daß die Temperatur und/oder die Feuchtigkeit des zerkleinerten Gutes abhängig von der Konsistenz des jeweiligen Materials und dessen Bearbeitungszustand geregelt wird.

3. Verfahren nach Anspruch 1 oder 2, dadurch gekennzeichnet, daß eine geregelte Frischluftzufuhr vorgesehen ist.

4. Vorrichtung zur Bearbeitung von Abfallstoffen, insbesondere zur Durchführung des Verfahrens nach Anspruch 1, mit einer Zerkleinerungsvorrichtung (15), einer Mischvorrichtung (5), einem Sumpf, einem Gehäuse (3), das eine Auslaß- und eine Einlaßöffnung oberhalb des Sumpfes umfaßt, und mit einer Fördereinrichtung zur Entleerung des Gehäuses, wobei eine Berieselungseinrichtung (6, 9) vorgesehen ist, die eine Steigvorrichtung (9) und eine Zuführungsvorrichtung (6) für die Steigvorrichtung (9) umfaßt, wobei die Steigvorrichtung (9) zur Umwälzung des Füllgutes einen Teilstrom des Füllgutes der Zerkleinerungsvorrichtung (15) zugeführt.

5. Vorrichtung nach Anspruch 4, dadurch gekennzeichnet, daß die Zuführungsvorrichtung (6) sich über den größten Teil des Gehäusebodens (18) zur Verhinderung von unerwünschten Ablagerungen erstreckt.

6. Vorrichtung nach Anspruch 4 oder 5, dadurch gekennzeichnet, daß die Steigvorrichtung (9) der Berieselungseinrichtung gleichzeitig als Fördervorrichtung zur Entleerung des Gehäuses verwendbar ist.

7. Vorrichtung nach einem der vorhergehenden Ansprüche 4 bis 6, dadurch gekennzeichnet, daß mit Hilfe einer Klappe der Fluß des Füllgutes zwischen dem Fülltrichter (14) und einem Entleerungskanal verstellbar ist.

8. Vorrichtung nach Anspruch 4, dadurch gekennzeichnet, daß die Zerkleinerungsvorrichtung (14, 15) sich innerhalb des berieselten Raumes der Berieselungsvorrichtung (6, 9) befindet.

9. Vorrichtung nach einem der vorhergehenden Ansprüche 4 bis 8, dadurch gekennzeichnet, daß die Zuführungs- (6) und Steigvorrichtung (9) zusätzlich als Mischwerke ausgebildet sind.

10. Vorrichtung nach einem der vorhergehenden Ansprüche 4 bis 9, dadurch gekennzeichnet, daß die Zuführungs- (6) und Steigvorrichtung (9) als gegenläufige Doppelschnecken (5, 8) ausgebildet sind.

11. Vorrichtung nach einem der vorhergehenden Ansprüche 4 bis 10, dadurch gekennzeichnet, daß Mittel zur geregelten Zu- und/oder Abfuhr von Luft, Wärme und/oder Feuchtigkeit vorgesehen sind.

## Claims

1. Method for the treatment of waste, in particular of organic food waste, with a crushing and mixing operation, the crushed and mixed filling material being supplied continuously in a first partial stream (P5) to a trickling device (6, 9) and in this case air flowing completely around it and in which case a second partial stream (P4) of the filling material is continuously returned to a crushing device (15).

2. Method according to Claim 1, characterised in that the temperature and/or the moisture of the crushed material is controlled depending on the consistency of the respective material and its processing condition.

3. Method according to Claim 1 or 2, characterised in that a controlled fresh air supply is provided.

4. Apparatus for processing waste, in particular for carrying out the method according to Claim 1, with a crushing device (15), a mixing device (5), a sump, a housing (3), which comprises an outlet and an inlet opening above the sump, and with a conveyor device for emptying the housing, a trickling device (6, 9) being provided, which comprises an uptake device (9) and a supply device (6) for the uptake device (9), the uptake device (9) supplying a partial stream of the filling material to the crushing device (15) for the circulation of the filling material.

5. Apparatus according to Claim 4, characterised in that the supply device (6) extends over the major part of the housing base (18) in order to prevent undesirable deposits.

6. Apparatus according to Claim 4 or 5, characterised in that the uptake device (9) of the trickling device can be used simultaneously as a conveying device for emptying the housing.

7. Apparatus according to one of the preceding Claims 4 to 6, characterised in that the flow of the filling material between the filling hopper (14) and an emptying channel can be adjusted by means of a flap.

8. Apparatus according to Claim 4, characterised in that the crushing device (14, 15) is located within the trickling chamber of the trickling device (6, 9).

9. Apparatus according to one of the preceding Claims 4 to 8, characterised in that the supply device (6) and uptake device (9) are additionally constructed as mixers.

10. Apparatus according to one of the preceding Claims 4 to 9, characterised in that the supply device (6) and uptake device (9) are constructed as counter-current twin-screw conveyors (5, 8).

11. Apparatus according to one of the preceding Claims 4 to 10, characterised in that means are provided for the controlled supply and/or discharge of air, heat and/or moisture.

## Revendications

1. Procédé pour traiter des déchets, en particulier des déchets alimentaires organiques, comportant un broyage et un processus de mélangeage, la matière de remplissage broyée et mélangée étant amenée de façon continue, en un premier courant partiel (P₅), à un dispositif de ruissellement (6,9) et étant en même temps complètement entourée d'air, et un second courant partiel (P₄) de la matière de remplissage étant ramené de façon continue dans un dispositif de broyage (15).

2. Procédé selon la revendication 1,
caractérisé en ce que la température et/ou l'humidité de la matière broyée sont réglées de façon dépendant de la consistance de la matière respective et de son état de traitement.

3. Procédé selon la revendication 1 ou 2,
caractérisé en ce qu'une amenée d'air frais réglée est prévue.

4. Dispositif pour traiter des déchets, en particulier pour la mise en oeuvre du procédé selon la revendication 1, comportant un dispositif de broyage (15), un dispositif de mélangeage (5), une citerne, un carter (3), qui comporte une ouverture d'entrée et une ouverture de sortie au-dessus de la citerne, et comportant un dispositif de transport pour vider le carter, un dispositif de ruissellement (6,9) étant prévu qui présente un dispositif de montée (9) et un dispositif d'amenée (6) pour le dispositif de montée (9), le dispositif de montée (9) amenant un courant partiel de la matière de remplissage au dispositif de broyage (15) pour faire circuler la matière de remplissage.

5. Dispositif selon la revendication 4,
caractérisé en ce que le dispositif d'amenée (6) s'étend sur la plus grande partie du fond du carter (18) pour empêcher des dépôts indésirables.

6. Dispositif selon la revendication 4 ou 5,
caractérisé en ce que le dispositif de montée (9) du dispositif de ruissellement peut être utilisé en même temps comme dispositif de transport pour vider le carter.

7. Dispositif selon une des revendications précédentes 4 à 6,
caractérisé en ce que, à l'aide d'un clapet, le flux de la matière de remplissage peut être réglé entre la trémie de remplissage (14) et un canal de vidage.

8. Dispositif selon la revendication 4,
caractérisé en ce que le dispositif de broyage (14,15) se trouve à l'intérieur de l'espace de ruissellement du dispositif de ruissellement (6,9).

9. Dispositif selon une des revendications précédentes 4 à 8,
caractérisé en ce que le dispositif d'amenée (6) et le dispositif de montée (9) sont réalisés de plus comme unités de mélangeage.

10. Dispositif selon une des revendications précédentes 4 à 9,
caractérisé en ce que le dispositif d'amenée (6) et le dispositif de montée (9) sont réalisés sous forme de vis sans fin doubles contrarotatives (5,8).

11. Dispositif selon une des revendications précédentes 4 à 10,
caractérisé en ce que des moyens pour régler l'amenée et/ou l'évacuation d'air, de chaleur et/ou d'humidité sont prévus.
